# EUROPÄISCHE PATENTANMELDUNG

(11) **EP 2 292 113 A2**
(43) Veröffentlichungstag der Anmeldung: **09.03.2011**
(21) Anmeldenummer: 09014040.1
(22) Anmeldetag: 10.11.2009
(51) Int. Cl.: A43B 13/02, A43B 13/12

(54) **Sohle**

(30) Priorität: 03.09.2009 DE 202009011928 U
(71) Anmelder: Aussieker, Michaela, 32312 Lübbecke (DE)
(72) Erfinder: Aussieker, Michaela, 32312 Lübbecke (DE)
(74) Vertreter: Rohnke, Christian

(57) **Zusammenfassung**

Erfindungsgemäß ist eine Sohle mindestens bereichsweise mit einem Verbundwerkstoff aus einem Gewebe und einer Kunststoff-Matrix, **dadurch gekennzeichnet, dass** das Gewebe mindestens bereichsweise an der Sohlenunterseite sichtbar ist und dass aus der Sohlenunterseite Laufprofilelemente hervorstehen.

## Beschreibung

Die vorliegende Erfindung betrifft eine Sohle mindestens bereichsweise aus einem Verbundwerkstoff mit einem Gewebe und einer Kunststoff-Matrix.

Der vorliegenden Erfindung liegt die Hauptaufgabe zugrunde, eine Sohle mindestens bereichsweise aus einem Verbundwerkstoff mit einem Gewebe und einer Kunststoffmatrix zu schaffen, bei der besonders einfach eine Schwächung oder eine Beschädigung des Gewebes sichtbar wird. Eine zusätzliche Aufgabe kann darin liegen, eine Sohle zu schaffen, bei der möglichst umweltverträgliche Bestandteile verwendet werden, insbesondere Naturfasern und/oder Recycling-Bestandteile, wie beispielsweise Altgummi-Bestandteile.

Die Lösung der Hauptaufgabe wird von einem Gegenstand mit den Merkmalen des Anspruchs 1 gelöst. Bevorzugte Ausgestaltungen der Erfindung sind in den Unteransprüchen angegeben.

Erfindungsgemäß ist eine Sohle mindestens bereichsweise aus einem Verbundwerkstoff mit einem Gewebe und einer Kunststoff-Matrix, insbesondere unter Verwendung von Altgummi, bei der das Gewebe mindestens bereichsweise auf der Sohlenunterseite sichtbar ist und bei der aus der Sohlenunterseite Laufprofilelemente hervorstehen.

Dadurch, dass das Gewebe mindestens bereichsweise auf der Sohlenunterseite sichtbar ist, kann besonders vorteilhaft und einfach eine Schwächung oder eine Beschädigung des Gewebes frühzeitig erkannt und beobachtet werden. Der Benutzer der Sohle, bzw. des Schuhs, der eine solche Sohle aufweist, kann durch das sichtbare Gewebe Folgeschäden vorbeugen und/oder einen Verschleiß seiner Sohle erkennen. Gegenüber dem Stand der Technik ist dieser Aspekt besonders vorteilhaft, da der Benutzer einer Sohle aus dem Stand der Technik Schwachstellen und/oder Schäden viel später erkennt. Oftmals wird der Benutzer bisher von einem Schaden, seiner Sohle bzw. seines Schuhs überrascht. Auch kann der Benutzer einer Sohle aus dem Stand der Technik beispielsweise nicht vor seiner Aktivität, beispielsweise beim Sport, Urlaub oder Stadtausflug, beurteilen, ob seine Sohle diese Aktivität noch zulässt, beziehungsweise nicht vielleicht schon so stark geschwächt oder beschädigt ist, dass er besser eine andere Sohle beziehungsweise einen anderen Schuh verwendet.

Die erfindungsgemäße Sohle oder der erfindungsgemäße Schuh kann - dadurch dass das Gewebe mindestens bereichsweise auf der Sohlenunterseite sichtbar ist - seinem Benutzer einen Eindruck darüber geben, wie haltbar und/oder beständig seine Sohle und/oder sein Schuh (noch) ist. Außerdem hat die erfindungsgemäße Sohle den Vorteil, beim gewöhnlichen Abrollen der Sohle während des Gehens in der Zugzone auf der Außenseite der Abrollwölbung das (zugfestere) Gewebe aufzuweisen, so dass die Kunststoffmatrix dann (in der Druckzone) im Wesentlichen nur gestaucht wird - und so die Sohle insgesamt verschleißfester ist.

Das Gewebe der Sohle kann eine Naturfaser, insbesondere einer Pflanzenfaser aufweisen. Pflanzenfaser ist ein Sammelbegriff für Fasern pflanzlicher Herkunft, die als Material verwendet werden können. Die Fasern können ausgewählt sein aus Samenfasern, insbesondere Baumwolle aus den Samenhaaren der Frucht der Baumwollpflanze, Kapok aus dem Inneren der Kapselfrucht des echten Kapokbaumes, Pappelflaum, Bastfasern, Bambusfasern, Brennnessel, Hanffaser, Jute, Leinen, Ramie und/oder Hartfasern, insbesondere Holzfasern und/oder Blattfasern, insbesondere Sisal, Abacá, Hartfaser aus den Blättern einer Bananenart und/oder Fruchtfasern, wie zum Beispiel Kokos. Auch können Pflanzenfasern aus Gräsern, insbesondere aus verschiedenen Binsengräsern, gespaltener Bambus und/oder andere Pflanzen als Faserstoff verwendet sein.

Alternativ oder zusätzlich können andere Faserstoffe, insbesondere auch tierische Fasern und/oder Chemiefasern, insbesondere Fasern aus natürlichen Polymeren oder aus synthetischen Polymeren Verwendung finden. Fasern aus natürlichen Polymeren können beispielsweise cellulosische Fasern sein. Auch kann das Gewebe Chemiefasern (auch Kunstfasern) enthalten. Chemiefasern können vorzugweise synthetische Polymere sein, insbesondere Polykondensationsfasern, wie beispielsweise Polyester, Polyamid, Polyamidimid, Polyimid, Polyphenylensulfid und/oder Aramid, und/oder Polymerisationsfasern, wie beispielsweise Polyacrylnitril, Polytetrafluorethylen, Polyethylen, Polypropylen, Polyvinylchlorid, und/oder Polyadditionsfasern, wie beispielsweise Polyurethan. In alternativen Ausgestaltungen kann das Gewebe auch anorganische Fasern aufweisen, wie beispielsweise Metallfasern. Mit anderen Worten kann das Gewebe auch ein Metallgewebe sein.

In einer besonders bevorzugten Ausgestaltung besteht das Gewebe aus pflanzlichen Fasern, vorzugsweise Jute. Auch kann das Gewebe behandelt sein, insbesondere gefärbt und/oder imprägniert und/oder beschichtet sein.

Die Matrix aus Kunststoff kann vorzugsweise zumindest teilweise elastisch ausgestaltet sein. Der Kunststoff kann beispielsweise Gummi, insbesondere Altgummi aufweisen oder sein. In einer alternativen Ausgestaltung kann das Altgummi zumindest teilweise Altreifen-Bestandteile aufweisen. Auch kann die Matrix aus Gummi und/oder das Gewebe ein Altreifenbestandteil sein oder aufweisen. So kann auch die ganze Sohle aus einem oder mehreren Altreifenbestandteilen zusammengesetzt sein.

Das Gewebe der Sohle ist zumindest bereichsweise auf der Sohlenunterseite sichtbar. Mit Sohlenunterseite ist insbesondere die Seite gemeint, die bei der gewöhnlichen Verwendung (als Schuhbestandteil) mit dem Boden in Kontakt kommt. Es kann vorteilhaft sein, dass das Gewebe auf einem möglichst großen Flächenbereich, insbesondere mehr als 20 %, mehr als 50 % oder sogar mehr als 70%, der Sohlenunterseite sichtbar ist. Der restliche Bereich der Sohlenunterseite - also der auf dem das Gewebe nicht sichtbar ist - kann Laufprofilelemente, insbesondere Noppen, Stollen oder sonstige Laufprofile aufweisen.

Des Weiteren kann die erfindungsgemäße Sohle mit mindestens einer weiteren Schicht kontaktiert und/oder verbunden sein, insbesondere verklebt und/oder vernäht sein. Eine weitere Schicht kann beispielsweise eine, insbesondere stossdämmpfende, Dämmschicht und/oder ein Fußbett sein. In einer bevorzugten Ausgestaltung ist das Fußbett ergonomisch ausgestaltet.

Eine solche Sohle kann für Schuhe jeglicher Art und Bauweise, insbesondere aber für leichte Schuhe, offene (z.B. durchlöcherte) Sommerschuhe, für Sandalen, oder Zehenstegsandalen (Flipp-Flopps), verwendet werden.

Diese und weitere Merkmale und Vorteile der vorliegenden Erfindung werden mit Bezug auf die beigefügten Zeichnungen von Ausführungsbeispielen der vorliegenden Erfindung weiter beschrieben. In den Zeichnungen zeigen:
Figur 1 einen bevorzugte Ausführungsform der Sohle in der Sicht auf die Sohlenunterseite und
Figur 2 eine Sicht auf die Sohlenunterseite einer alternativen Ausführungsform.

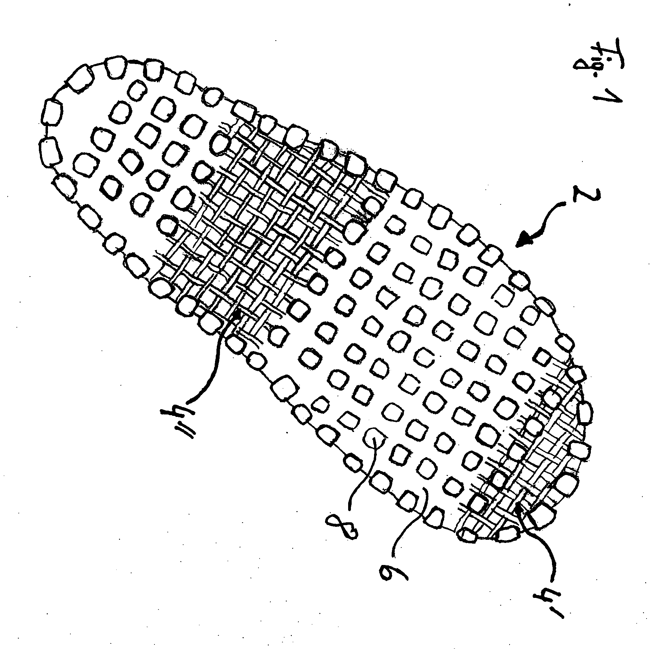

In der Figur 1 ist die Sicht auf die Sohlenunterseite einer bevorzugten Ausführungsform einer Sohle 2 abgebildet. Die Sohle 2 weist ein Gewebe 4 auf, das aus Naturfasern besteht. Das Gewebe ist zumindest teilweise (an der Spitze der Sohle 4' und im Bereich zwischen Hacken und Ballenlauffläche 4") auf der Sohlenunterseite sichtbar.

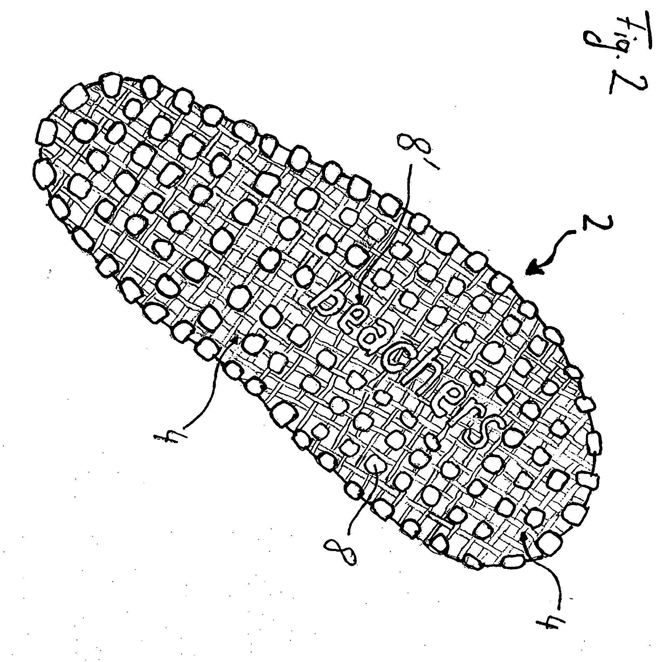

In Figur 2 ist die Sicht auf die Sohlenunterseite einer alternativen Ausführungsform der Sohle 2 zu sehen. Die Sohle 2 ist im Wesentlichen gleich der Sohle aus Figur 1. Zusätzlich ist ein alternatives Laufprofilelement 8' in Form eines Markennamens erkennbar (Laufprofilelemente können auch die Formen von Figuren, Begriffe und/oder Logos haben). In einer Ausgestaltung nach Figur 2 ist das Gewebe 4 zudem auf der gesamten Sohlenunterseite sichtbar und nur an den Stellen, die mit den Laufprofilelementen 8 und 8', hier Laufprofilnoppen 8 und Schriftzug 8', versehen sind, von diesen Laufprofilelementen verdeckt.

## Patentansprüche

1. Sohle mindestens bereichsweise mit einem Verbundwerkstoff aus einem Gewebe und einer Kunststoff-Matrix, **dadurch gekennzeichnet, dass** das Gewebe mindestens bereichsweise an der Sohlenunterseite sichtbar ist und dass aus der Sohlenunterseite Laufprofilelemente hervorstehen.

2. Sohle nach Anspruch 1 **dadurch gekennzeichnet, dass** das Gewebe aus Naturfaser, insbesondere aus Pflanzenfaser, besteht.

3. Sohle nach einem der vorhergehenden Ansprüche, **dadurch gekennzeichnet, dass** die Matrix Altgummi, insbesondere aus Altreifen, aufweist.

4. Sohle nach einem der vorhergehenden Ansprüche **dadurch gekennzeichnet, dass** die Laufprofilelemente Altgummi, vorzugsweise Altreifenbestandteile, aufweisen.

5. Sohle nach einem der vorhergehenden Ansprüche **dadurch gekennzeichnet, dass** die Sohlenunterseite einen Ausschnitt, vorzugsweise in der Größe der Schuhsohle, aus einem Altreifengewebe aufweist oder so angepasst ist, dass die Sohlenunterseite einem Autoreifengewebe nachempfunden ist.

6. Schuh mit Sohle nach einem der vorgehenden Ansprüche, **dadurch gekennzeichnet dass** der Schuh ein offener Schuh, eine Sandale oder eine Zehenstegsandale (Flipp-Flopp) ist.
